Europäisches Patentamt

European Patent Office

Office européen des brevets

(11) Publication number: **0 272 227 B1**

(12) **EUROPEAN PATENT SPECIFICATION**

(45) Date of publication of patent specification: **16.09.92** (51) Int. Cl.⁵: **F16D 65/24**

(21) Application number: **87830441.9**

(22) Date of filing: **15.12.87**

(54) Diaphragm brake cylinder for motor vehicles.

(30) Priority: **17.12.86 IT 5421086 U**

(43) Date of publication of application:
**22.06.88 Bulletin 88/25**

(45) Publication of the grant of the patent:
**16.09.92 Bulletin 92/38**

(84) Designated Contracting States:
**AT BE CH DE ES FR GB IT LI NL SE**

(56) References cited:
**DE-A- 3 313 214**
**FR-A- 2 544 431**
**GB-A- 2 128 255**

(73) Proprietor: **BENDIX HEAVY VEHICLE SYSTEMS ITALIA S.P.A.**
**Via Adriano 81**
**I-20128 Milano(IT)**

(72) Inventor: **Rapa, Antonio**
**Via Guardi, 58**
**I-20092 Cinisello Balsamo Milano(IT)**
Inventor: **de Pietri, Mauro**
**Via Papa Giovanni XXIII, 13**
**I-20068 Peschiera Borromeo Milano(IT)**

(74) Representative: **Rambelli, Paolo et al**
**Jacobacci-Casetta & Perani S.p.A. Via Alfieri 17**
**I-10121 Torino(IT)**

Rank Xerox (UK) Business Services

## Description

The present invention relates to a diaphragm brake cylinder for motor vehicles, of the type generally used on engines provided with wedge brakes.

In particular, the invention relates to a diaphragm brake cylinder comprising:

- a rigid casing provided with at least one inlet opening and at least one vent opening for an operating fluid, generally air, and including a diaphragm supported by the walls of the casing and defining a pressure chamber and a vent chamber communicating with the inlet and vent opening respectively,
- a tubular body connected to the rigid casing and communicating with the vent chamber,
- a stem-like control member arrangement cooperating with the diaphragm and slidably mounted in the tubular body, and
- guide means interposed between the control member arrangement and the tubular body, for allowing relative movement therebetween, wherein the guide means consist of a channel-like annular member mounted in the tubular body with its concavity facing the vent chamber and having in its dorsal region at least one opening for allowing the venting air to flow between the vent chamber and the cavity of the tubular body, and wherein a filter element is provided intended to filter the operating fluid flowing between the vent chamber and the tubular body during operation.

DE-A-3 313 214 discloses a diaphragm brake cylinder having the above mentioned features wherein the filter element is arranged in the stem.

A bellow-like sealing member, which is subject to stress and wear during operation is required, in order to prevent flow of the venting fluid between the vent chamber and the inner chamber of the tubular body.

The object of the present invention is to provide a diaphragm brake cylinder which is more simple and economical and requires a lower number of moving elements which may be subjected to wear.

Such object is achieved by a diaphragm brake cylinder, characterised in that said filter member is an annular body housed in the concavity of said annular glide member to intercept the stream of operating fluid flowing through said at least one opening, the annular guide member has a plurality of angularly spaced radial partitions extending between the internal wall and the eternal wall of the channel and defining with these walls a plurality of compartments, and the annular filter element has a plurality of protruberances extending axially from its annular portion, each to engage with a respective compartment of the guide member.

The advantages and further characteristics of the invention will become clear from the detailed description which follows with reference to the appended drawings, provided purely by way of non-limiting example, in which

Figure 1 is a partially sectioned front view of the brake cylinder according to the invention;

Figures 2, 3 and 4 are longitudinal sections of a detail of the brake cylinder according to constructional variants;

Figure 5 is a plan view of a detail of Figure 1;

Figure 6 is a section taken on the line VI-VI of Figure 5; and

Figure 7 is a perspective view of a detail of Figures 1 and 4.

With reference to the drawings, a brake cylinder comprises a rigid casing 2 of sheet steel formed by two half-shells 2a and 2b clamped together by a stirrup 4. A diaphragm 6 is interposed between the two half-shells and defines within the casing a pressure chamber 8 provided with at least one opening 12 for the supply of pressurised air and a vent chamber 10 with at least one opening 14 for discharge of the air.

A tubular drum 16 defining a cavity 18 is connected to the casing 2. The drum 16 has an externally-threaded end portion 16a for connection to a cylindrical body, schematically indicated 20 in the drawings, in which wedges, not illustrated, are housed.

Within the casing 2 is a transmission and control member 22 formed by a plate 24 which cooperates with the diaphragm 6 and by a stem 26 which defines a seat 28 intended to receive a push rod 30. The plate 24 is kept in contact with the diaphragm 6 by means of a helical spring 32 reacting between the rod 30 and the body 20.

The stem 26 of the transmission member 22 is mounted inside the drum 16 with the interposition of an annular channel-like guide member 34 of elastomeric material.

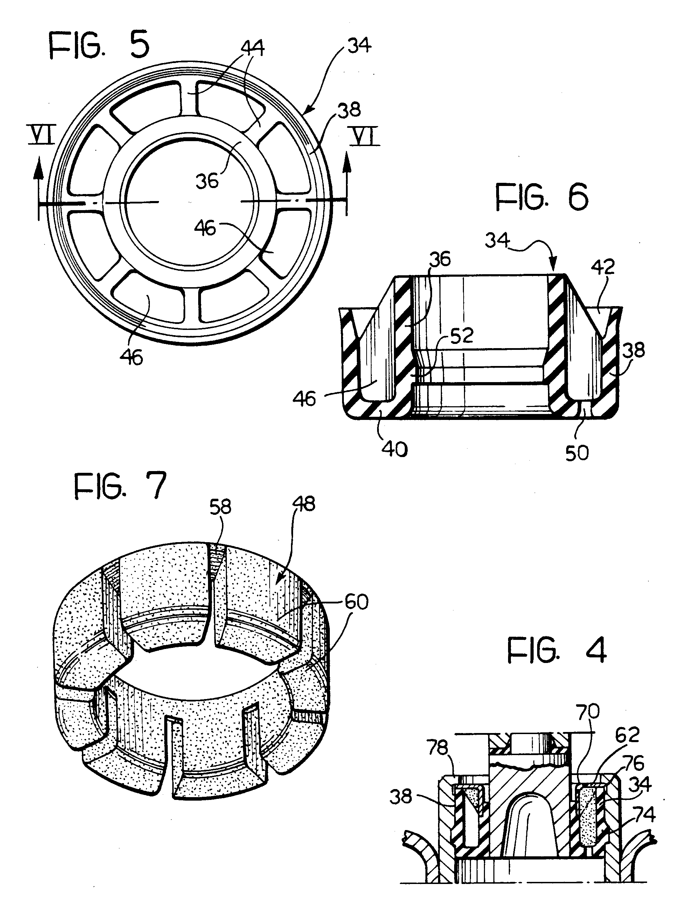

According to a preferred embodiment illustrated in Figures 5 and 6, the annular guide member 34 has a radially internal wall 36 and a radially external wall 38 connected by an annular base 40 so as to define an annular channel 42. A plurality of angularly-spaced radial partitions 44 which subdivide the channel 42 into a plurality of compartments 46 extend between the walls 36 and 38. The base wall 40 has at least one opening 50 which puts the outlet chamber 10 into flow communication with the cavity 18.

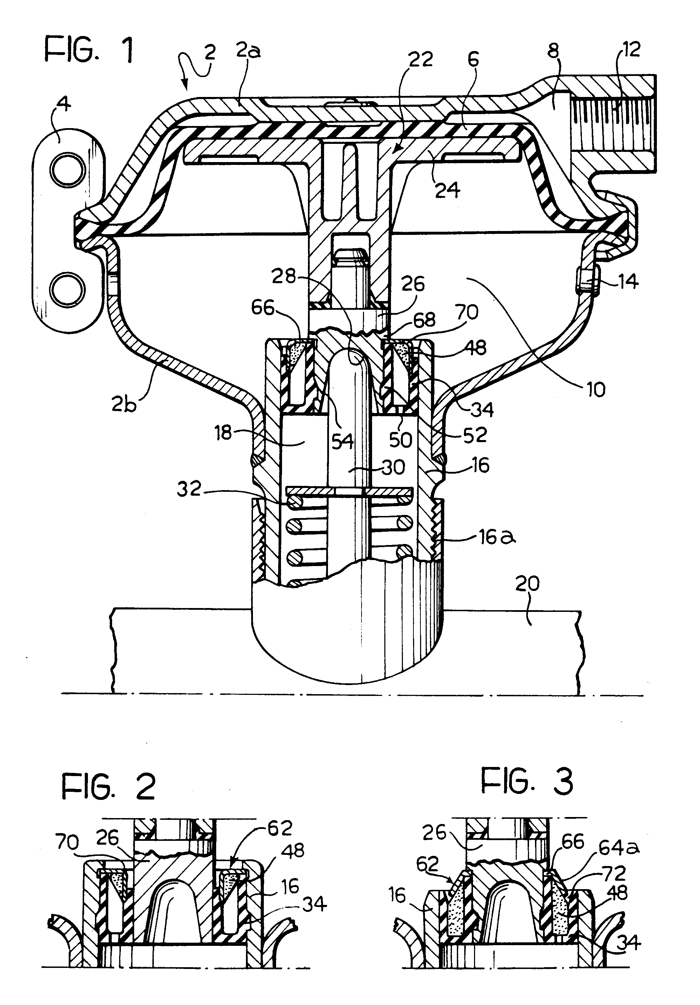

In the embodiment of Figures 1, 3 and 6, the internal wall 36 of the guide member 34 has an inwardly-projecting annular rib 52 which is resiliently engageable with a groove 54 formed in the stem 26. The guide member 34 is mounted fast with the stem 26 with the concavity of the channel facing towards the chamber 10 and with the external surface of the wall 38 sealingly slidably engaged with the internal surface of the drum 16.

The annular filter element 48 is housed in the channel 42 so as to intercept dust and impurities in the airstream which flows between the vent chamber 10 and the cavity 18 through the openings 50 during operation of the brake cylinder. The use of a filter element thus allows the infiltration of impurities, whose progressive accumulation could even lead to jamming of the movable parts of the braking element, to be prevented so that the reliability of the device is improved.

According to the preferred embodiment illustrated in Figure 7, the filter element 48 has an annular portion 58 from which extends a plurality of angularly spaced protruberances 60, each engageable with a respective compartment 46. The filter element 48 may consist of porous synthetic or metallic material, for example, sintered powder.

The filter element 48 is preferably kept in its seat by the use of an annular metal stop member 62. In Figure 1, the stop member 62 is cup-shaped with a cylindrical wall 64 and an annular base 66 and is mounted fast with the stem 26, locked in position between a radial shoulder 68 of the stem and the internal wall 34 of the guide member. The cylindrical wall 64 extends in contact with the wall 38 of the guide member. In this embodiment, the stop member has at least one opening 70 intended to allow air to flow through the filter element and the opening or plurality of openings 50.

In the embodiment of Figure 3, the stop member 62 has a frusto-conical wall 64a extending towards the wall 38 in such a way that an annular gap 72 is left for the passage of air through the filter 48.

Figures 2 and 4 illustrate constructional variants which achieve equal utility. According to these variants, the guide member 34 is fixed to the drum 16 by a radial ridge 74 which engages a complementary groove in the internal wall 36 of the drum. In this case, the surface of the stem 26 is in sealing sliding contact with the internal wall 36 of the guide member. The stop member 62 is shaped like a bush with a flange 76 clamped between an internal radial shoulder 78 of the drum and the external wall 38 of the guide member. The cylindrical wall of the bush extends axially into engagement with the wall 36 of the guide member. In this case also, the stop member has at least one opening 70 for the flow of fluid through the filter element and the openings 50.

## Claims

1. A diaphragm brake cylinder comprising:
   - a rigid casing (2) provided with at least one inlet opening (12) and at least one vent opening (14) for an operating fluid, and including a diaphragm (6) supported by the wall of the casing and defining a pressure chamber (8) and a vent chamber (10) communicating with the inlet and vent openings respectively,
   - a tubular body (16) connected to the rigid casing and communicating with the vent chamber,
   - a stem-like control member arrangement (22, 26) cooperating with the diaphragm and slidably mounted in the tubular body, and
   - guide means (34) interposed between the control member arrangement and the tubular body, for allowing relative movement therebetween, wherein the guide means consist of a channel-like annular member (34) mounted in the tubular body with its concavity facing the vent chamber and having in its dorsal region at least one opening (50) for allowing the venting air to flow between the vent chamber and the cavity of the tubular body, and wherein a filter element (48) is provided to filter the operating fluid flowing between the vent chamber and the tubular body during operation, characterised in that said filter member (48) is an annular body housed in the concavity of said annular guide member (34) to intercept the stream of operating fluid flowing through said at least one opening (50), the annular guide member has a plurality of angularly spaced radial partitions (44) extending between the internal wall (36) and the external wall (38) of the channel and defining with these walls a plurality of compartments (46), and the annular filter element (48) has a plurality of protruberances (60) extending axially from its annular portion (58) each to engage with a respective compartment (46) of the guide member.

2. A diaphragm brake cylinder according to Claim 1, characterised in that it includes an annular stop member (62) for retaining the filter element in its housing seat defined by the annular guide member, said stop member (62) having at least one opening (70) for allowing the operating fluid to flow between the outlet chamber (10) and the tubular body (16) through the filter element during operation.

3. A diaphragm brake cylinder according to Claims 1 and 2, characterised in that the annular guide member is mounted fast with the stem (26) of the transmission member and with its radially external surface sealingly slidably engaged with the internal surface of the tubular body (16) and the stop member (62) is cup-shaped with its annular base wall (66) in engagement with the stem of the transmission member.

4. A diaphragm brake cylinder according to Claims 1 and 2, chararterised in that the annular guide member is mounted fast with the tubular body (16) and with its radially internal surface sealingly slidably engaged with the stem (26) of the transmission member, and in that the stop member (62) is formed as a bush with a flange (76) clamped between the tubular body (16) anti the external radial wall of the guide member.

**Patentansprüche**

1. Membran-Bremszylinder, folgendes umfassend:
   - ein starres Gehäuse (2), das mit mindestens einer Einlaßöffnung (12) und mindestens einer Lüftungsöffnung (14) für ein Betriebsmedium, versehen ist und eine Membran (6) aufweist, die von der Gehäusewand gehalten wird und eine Druckkammer (8) sowie eine Lüftungskammer (10) bildet, welche jeweils mit der Einlaß- bzw. der Lüftungsöffnung in Verbindung stehen,
   - einen rohrförmigen Körper (16), der mit dem starren Gehäuse verbunden ist und mit der Lüftungskammer in Verbindung steht,
   - eine Anordnung mit stabartigem Steuerglied (22, 26), die mit der Membran zusammenwirkt und in dem rohrförmigen Körper verschiebbar angeordnet ist, und
   - Führungsvorrichtungen (34), welche zwischen der Steuergliedanordnung und dem rohrförmigen Körper eingefügt sind, um eine relative Bewegung dazwischen zu ermöglichen, worin die Führungsvorrichtungen aus einem kanalartigen ringförmigen Teil (34) bestehen, welches in dem rohrförmigen Körper so angeordnet ist, daß seine Konkavität der Lüftungskammer zugewandt ist, und welches in seinem Rückenbereich mindestens eine Öffnung (50) zur Ermöglichung des Strömens der Lüftungsluft zwischen der Lüftungskammer und dem Hohlraum des rohrförmigen Körpers aufweist, und worin ein Filterelement (48) vorgesehen ist, um das Betriebsmedium, welches im Betrieb zwischen der Lüftungskammer und dem rohrförmigen Körper strömt, zu filtern, dadurch gekennzeichnet, daß das Filterelement (48) ein ringförmiger Körper ist, der in der Konkavität des ringförmigen Führungsteils (34) angeordnet ist, um den Strom von Betriebsmedium, das durch die mindestens eine Öffnung (50) strömt, zu unterbrechen, das ringförmige Führungsteil eine Vielzahl von winkelig beabstandeten radialen Trennwänden (44) aufweist, welche zwischen der Innenwand (36) und der Außenwand (38) des Kanals verlaufen und mit diesen Wänden eine Vielzahl von Abschnitten (46) bilden, und das ringförmige Filterelement (48) eine Vielzahl von Vorsprüngen (60) aufweist, die axial von seinem ringförmigen Abschnitt (58) verlaufen, wovon jeder in einen jeweiligen Abschnitt (46) des Führungsteiles eingreifen soll.

2. Membran-Bremszylinder gemäß Anspruch 1, dadurch gekennzeichnet, daß er ein ringförmiges Anschlagteil (62) zum Zurückhalten des Filterelementes in seinem Gehäusesitz aufweist, welcher durch das ringförmige Führungsteil gebildet wird, wobei das Anschlagteil (62) mindestens eine Öffnung (70) hat, um im Betrieb ein Fließen des Betriebsmediums zwischen der Auslaßkammer (10) und dem rohrförmigen Körper (16) durch das Filterelement zu ermöglichen.

3. Membran-Bremszylinder gemäß den Ansprüchen 1 und 2, dadurch gekennzeichnet, daß das ringförmige Führungsteil fest mit dem Stab (26) des Übertragungsteiles verbunden ist, und mit seiner radialen Außenfläche abdichtend und verschiebbar in die Innenfläche des rohrförmigen Körpers (16) eingreift und das Anschlagteil (62) becherförmig ist, wobei seine ringförmige Basiswand (66) in Eingriff mit dem Stab des Übertragungsteiles steht.

4. Membran-Bremszylinder gemäß den Ansprüchen 1 und 2, dadurch gekennzeichnet, daß das ringförmige Führungsteil fest mit dem rohrförmigen Körper (16) verbunden ist und mit seiner radialen Innenfläche abdichtend und verschiebbar in den Stab (26) des Übertragungsteiles eingreift, und dadurch, daß das Anschlagteil (62) als Büchse mit einem Flansch (76) ausgebildet ist, der zwischen den rohrförmigen Körper (16) und die äußere radiale Wand des Führungsteiles geklemmt ist.

**Revendications**

1. Cylindre de frein à diaphragme, comprenant:
 - un carter rigide (2) pourvu d'au moins une ouverture d'admission (12) et d'au moins une ouverture d'évacuation (14) pour un fluide fonctionnel, et comprenant un diaphragme (6) supporté par la paroi du carter et définissant une chambre de pression (8) et une chambre d'évacuation (10) communiquant respectivement avec les ouvertures d'admission et d'évacuation,
 - un corps tubulaire (16) relié au carter rigide et communiquant avec la chambre d'évacuation,
 - un agencement d'organe de commande (22, 26) en forme de tige, coopérant avec le diaphragme et monté à coulissement dans le corps tubulaire, et
 - un moyen de guidage (34) interposé entre l'agencement d'organe de commande et le corps tubulaire, pour permettre un déplacement relatif entre ces derniers, le moyen de guidage consistant en un organe annulaire (34) en forme de gorge, monté dans le corps tubulaire et sa concavité faisant face à la chambre d'évacuation et présentant, dans sa zone dorsale, au moins une ouverture (50) pour permettre à l'air d'évacuation de s'écouler entre la chambre d'évacuation et la cavité du corps tubulaire, et inn élément de filtrage (48) étant prévu pour filtrer le fluide fonctionnel s'écoulant entre la chambre d'evacuation et le corps tubulaire, durant le fonctionnement,

 caractérisé en ce que ledit organe de filtrage (48) est un corps annulaire logé dans la concavité dudit organe de guidage annulaire (34), pour intercepter le courant de fluide fonctionnel s'écoulant dans ladite au moins une ouverture (50), l'organe de guidage annulaire présentant une pluralité de parois de séparation radiales (44) espacées de manière angulaire, s'étendant entre la paroi interne (36) et la paroi externe (38) de la gorge et définissant, avec ces parois, une pluralité de compartiments (46), et l'élément de filtrage annulaire (48) présentant une pluralité de saillies (60) s'étendant axialement depuis sa partie annulaire (58), chacune venant en contact avec un compartiment (46) respectif de l'organe de guidage.

2. Cylindre de frein à diaphragme selon la revendication 1, caractérisé en ce qu'il comprend un organe de butée annulaire (62) pour maintenir l'élément de filtrage dans son siège de logement, défini par l'organe de guidage annulaire, ledit organe de butée (62) présentant au moins une ouverture (70) pour permettre au fluide fonctionnel de s'écouler entre la chambre de sortie (10) et le corps tubulaire (16), en passant à travers l'élément de filtrage, durant le fonctionnement.

3. Cylindre de frein à diaphragme selon les revendications 1 et 2, caractérisé en ce que l'organe de guidage annulaire est monté d'un seul tenant avec la tige (26) de l'organe de transmission, sa surface radialement externe étant en contact de coulissement étanche, avec la surface interne du corps tubulaire (16) et l'organe de butée (62) est en forme de coupelle, sa paroi de base annulaire (66) étant en contact avec la tige de l'organe de transmission.

4. Cylindre de frein à diaphragme selon les revendications 1 et 2, caractérisé en ce que l'organe de guidage annulaire est monté rigide, le corps tubulaire (16) et sa surface radialement interne étant en contact de coulissement étanche avec la tige (26) de l'organe de transmission, et en ce que l'organe de butée (62) est formé comme une douille dotée d'une bride (76), serrée entre le corps tubulaire (16) et la paroi radiale externe de l'organe de guidage.

FIG. 1

FIG. 2

FIG. 3

FIG. 5

FIG. 6

FIG. 7

FIG. 4